Europäisches Patentamt

European Patent Office

Office européen des brevets

(11) Publication number: **0 329 347**
**A2**

(19)

## (12) EUROPEAN PATENT APPLICATION

(21) Application number: **89301304.5**

(22) Date of filing: **10.02.89**

(51) Int. Cl.⁴: **A23D 5/00 , C11B 3/00 ,**
**A23C 15/00 , A23C 19/00**

(30) Priority: **12.02.88 NZ 223508**

(43) Date of publication of application:
**23.08.89 Bulletin 89/34**

(84) Designated Contracting States:
**AT BE CH DE ES FR GB GR IT LI LU NL SE**

(71) Applicant: **NEW ZEALAND DAIRY RESEARCH**
**INSTITUTE**
**Dairy Farm Road Fitzherbert West**
**Palmerston North(NZ)**

(72) Inventor: **Keen, Alan Robert c/o New Zealand**
**Dairy**
**Research Institute Dairy Farm Road**
**Fitzherbert Palmerston North(NZ)**
Inventor: **Ward, David Douglas c/0 New**
**Zealand Dairy**
**Research Institute Dairy Farm Road**
**Fitzherbert Palmerston North(NZ)**
Inventor: **Hobman, Peter Graeme c/o New**
**Zealand Dairy**
**Research Institute Dairy Farm Road**
**Fitzherbert Palmerston North(NZ)**

(74) Representative: **Brown, John David et al**
**FORRESTER & BOEHMERT**
**Widenmayerstrasse 4/I**
**D-8000 München 22(DE)**

(54) Improvements in or relating to methods of removing sterols and/or other steroidal compounds from edible fats and/or oils and/or fats and/or oil from wich such sterols and/or other steroidal compounds have been removed.

(57) A solvent or solvent system to effect selected removal of the sterol or steroidal compound is added to and maintained in contact with liquid fat or oil for a desired time and the solvent and extracted components separate from the solvent. In the examples milk fat has cholesterol therein reduced and the milk fat containing a reduced amount of cholesterol used in foodstuffs. The extracted cholesterol is useful and fat remaining after the solvent has been removed is useful as a source of desirable flavours. The solvent may be subsected to a recovery process for reuse.

# Improvements in or relating to methods of removing sterols and/or other steroidal compounds from edible fats and/or oils and/or oils from which such sterols and/or other steroidal compounds have been removed and/or sterols and/or other steroidal compounds so removed from fats and/or oils

This invention relates to methods of removing sterols and/or other steroidal compounds from edible fats and/or oils and/or fats and/or oils from which such sterols and/or other steroidal compounds have been removed and/or sterols and/or other steroidal compounds so removed from fats and/or oils and in particular relates to the production of cholesterol reduced milk fat suitable for the processed food industry.

## SUMMARY OF THE INVENTION

It is an object of the present invention to provide a method of removing sterols and/or other steroidal compounds from edible fat and/or oils and/or fats and/or oils from which such sterols and/or steroidal compounds have been removed and/or sterols and/or other steroidal compounds which have been so removed from fats and/or oils which will at least provide the public with a useful choice.

Accordingly in one aspect the invention consists in a method reducing the amount of sterols and/or other steroidal compounds present in edible fats and/or oils from said edible fats and/or oils, said method comprising the steps of:

adding a solvent and/or a modified solvent system said solvent and/or solvent system being selected to effect selective removal of the sterol and/or other steroidal compound 5;

maintaining the solvent in contact with the fat and/or oil in liquid condition for a predetermined length of time;

separating the solvent from the fat or oil and separating out extracted components from the solvent.

In a further aspect the invention consist in an edible fat and/or oil, the amount of sterols and/or other steroidal compounds in which has been reduced by a method according to the preceding paragraph.

In a still further aspect the invention consist in sterols and/or other steroidal compounds preferably cholesterol removed from an edible fat and/or oil preferably milk fat by a method according to the above paragraph.

## FIELD OF THE INVENTION

This invention relates to the removal of sterols from edible fats and/or oils and/or other steroidal compounds and especially the production of cholesterol-reduced milk-fat, suitable for the processed food industry. Particularly in milk fat systems, most of the natural colour and much of the desirable natural flavour is retained.

A fat and/or oil reduced by low melting point lipid fractions remaining after removal of the solvent is useful as a source of desirable flavours.

## BACKGROUND OF THE INVENTION

There are a number of well established procedures for the removal of colour and objectionable matter from edible oils and fats. Many of these processes rely on an active adsorbent such as carbon, clays, aluminas, silicas and surface treated derivatives there of. Swern used such methods for bleaching oils [see Baileys Industrial Oils & Fat Products pp 771-77 (1964)]. Other such adsorption processes are available as known art, see U.S. Pat. Nos. 4,112,129; 3,450,541; 2,2118,819; 3,519,435 (Fractionation of Milk Fats); 4,443,379; and 4,005,228 (milkfat crystallising using acetone), New Zealand Patent No. 209508 and South African Patent No. 8516968 describe the use of appropriate absorbent systems for the removal of cholesterol from milk fats and steroidal compounds from fats and/or oils.

Patents for cholesterol reduction in egg products also exist (see U.S. Patent Nos. 3,987,212; 3,941,892 and 3,563,765).

Very little information appears to exist for the reduction of cholesterol from milkfats. Belgium Patent no.

862,264 utilises molecular vacuum distillation to remove cholesterol from butter. U.S. Patent No. 3,919,045 details removal of cholesterol and its esters from fat processing residues by micro organism degradation followed by solvent extraction. A Japanese Patent No. 62,134,042 details cholesterol removal from butter by super critical liquid $CO_2$ extraction. German Patents No. 3,313,915 and 3,313,915 describe the super critical extraction of sterols from oils after tranesterification.

Liquid/liquid extraction is a known procedure, used in many facets of the chemical and food industry. Reviews can be found in: ('Counter current extraction' Ed. S. Hartland, Pergamon Press 1970; "Recent advances in liquid/liquid extraction'. Pergamon Press Ed. C HANSON, 1971; "HANDBOOK of Liquid Extraction' J. Wiley & Sons, New York, 1983). These texts provide accounts of liquid/liquid extraction used in the petro chemical industry, coal tar industry, food industry, pharmaceutical industry etc. Within the food industry such a procedure has been used to decaffeinate coffee, obtain essential oils from citrus materials, extract flavours and so on.

To our knowledge, there are no patents covering the extraction of cholesterol from milkfats using liquid/liquid extraction to provide a low cholesterol edible milkfat. We believe such a cholesterol reduced fat to be suitable for the production of any product where milkfat would normally be used and to have advantages over non cholesterol reduced i.e. natural milkfat.

The process described herein provides a simple, cost effective method of producing large commercial quantities of low cholesterol milkfat suitable for the production of edible processed foods.

Preferred forms of the invention will now be described. According to its referred method of putting the present invention into effect, sterols and/or other steroidal compounds are preferentially removed and/or recovered by use of solvent extraction processes employing a solvent system which is lipophobic in nature and designed to effect selective removal of the sterol and/or steroidal compound whilst at the same time minimising the solution of the fat or oil in the solvent. The sterol and/or steroidal compound is then recovered in a purified or concentrated form from the solvent, and preferably the solvent is cleansed or purified for reuse.

The invention is of particular use in separating as a selected sterol, cholesterol from milk fat.

Accordingly the preferred method according to the invention is to provide a mixture of milk fat eg. AMF and a suitable solvent at an elevated temperature, the mixture of solvent and AMF being then separated out by gravity or otherwise.

The method may be effected by reheating the steps of subjecting already treated fat and/or oil to further treatment by fresh solvent or solvent treated to a reusable condition, the repetition being effected a desired number of times.

Alternatively treatment may be effected in a column with treated fat and/or oil being removed from one end of the column while fat and/or oil and fresh solvent or solvent treated to a reusable condition are added to the other end of the column.

The ratio of solvent to fat will be dependant on the design and operation of the liquid/liquid extraction flow, including the number of times the extraction process is repeated.

According to the preferred form of the invention, milkfat, and solvent are intimately mixed in a liquid/liquid contactor at a temperature of 40 - 45°C. Laboratory experiments have demonstrated that phase transfer of cholesterol is exceedingly rapid, thus contact time will depend on efficiency of mixing. After mixing/extraction the two phases are separated. The fat phase is subject to steam stripping (removing all or substancially all traces of solvent), while the solvent phase can be recovered using a variety of procedures. Solvent recovery, provides reusable solvent and the process provides by-product streams containing fat, cholesterol and flavour components.

## PREFERRED EMBODIMENTS OF THE INVENTION

In a preferred process, milkfat is heated beyond its melting point (e.g. between 40 - 45°C), and once liquified, is pumped into liquid/liquid leaching equipment (e.g. a series of mixer/settler extractors or a leaching column). The solvent phase used can be pure methanol or methanol/water mixtures, or methanol/water and some other methanol soluble organic solvent. Other alcohol or alcohol water systems can also be used. Prior to contact with the fat phase the solvent is heated to the same temperature as the milkfat (e.g. 40 - 45°C).

The following discussion and results are drawn from data obtained on a batch mixer/settler pilot plant using a cross flow system, unless otherwise indicated.

Milkfat (nominally 33 kg) and solvent (nominal solvent to fat ratio 5:1) was mixed, continuously for 30 minutes at 40 - 45° C. Agitation was then discontinued and the phases allowed to separate. The extracted fat phase was drawn off, weighed, and mixed with a second quantity of fresh solvent in the mass ratio of 5:1 solvent to fat. The mixing settling and separation procedure previously outlined was repeated six times. At each stage the cholesterol content of both the fat and solvent phases were measured.

The results of this exercise for 3 separate experiments are set out in the tables below. Table I and II indicate the quantities of raw materials used and the data required for an overall mass balance.

Table 1

| Raw Materials | | | |
|---|---|---|---|
| | Batch 1 | Batch 2 | Batch 3 |
| wt of AMF, kg | 33.8 | 33.3 | 36.4 |
| wt of MeOH, kg* | 910 | 967 | 964 |
| wt of water, kg | 9.5 | 11.3 | 3.0 |
| % water | 1 | 2 | 2 |
| Solvent:fat ratio | 4.5 | 4.9 | 4.4 |

\* Note that for batches 2 & 3 this refer wgt of recycled (Aqueous) solvent.

Table II

| Reaction Products | | | |
|---|---|---|---|
| | Batch 1 | Batch 2 | Batch 3 |
| wt of AMF, kg | 17.9 | 18.9 | 19.5 |
| wt of Cholesterol, rich fraction, kg | 7.3 | 6.8 | 6.3 |
| wt of Precipitated Fat, kg | 6.2 | 6.6 | 9.4 |
| interface, kg | 1.7 | 0.7 | - |
| methanol + water, kg | 914 | 964 | 966 |
| % Methanol lost | 0.7 | 1.5 | 0.1 |

Table III

| Cholesterol Content of AMF during Processing - Methanol free basis | | | | | | |
|---|---|---|---|---|---|---|
| Extraction Number | Batch 1 | | Batch 2 | | Batch 3 | |
| | mg/g | % removed | mg/g | % removed | mg/g | % removed |
| 0 | 2.42 | .0 | 2.42 | 0 | 2.42 | 0 |
| 1 | 1.43 | 40.9 | 1.80 | 25.6 | | |
| 2 | 0.81 | 65.5 | 0.97 | 59.9 | | |
| 3 | 0.45 | 81.0 | 0.49 | 79.8 | | |
| 4 | 0.25 | 89.7 | 0.32 | 86.8 | | |
| 5 | 0.12 | 95.0 | 0.16 | 93.4 | | |
| 6 | 0.065 | 97.3 | 0.-0. 09 | 96.3 | 0.108 | 95.5 |

After the initial phase separation, cooling of the bulk solvent phase to 5° C resulted in precipitation of most of the solvent entrained fat.

If desired the precipitated fat is recycled, and the treatment with fresh solvent with appropriate fat/solvent ratios being repeated as many times as is considered necessary to give the desired reduction of cholesterol in the fat.

Distillation of the cooled solvent phase provided reusable clean methanol/water and a cholesterol rich residue which contained some flavour components and some residual fat. This fraction could be further processed if required, separating fat, flavour components and cholesterol.

The recovered solvent was assayed for water content by a Karl Fischer procedure, with any deficiencies being made good prior to its re-use in batches 2 & 3.

Very little interface material was observed between the solvent and fat phase on separation. The quantities obtained are listed in Table II.

Table III lists the cholesterol levels observed in the fat phase after each extraction stage. Cholesterol was measured during a g.l.c. triglyceride assay on the fat phase against an $nC_{28}$ internal standard.

As will be seen from Table III, between 95.5% and 97.3% of the free cholesterol is removed from milkfat using this process. (Assaying for total cholesterol indicated that an average of 88% of all cholesterol had been removed from the milkfat using this process).

After extraction the milkfat was then steam stripped under reduced pressure at 70°C for 15 minutes to remove all traces of residual organic solvent. At this point milkfat was ready to use for product manufacture as detailed subsequently.

Notes concerning the pilot scale manufacture of cholesterol reduced milkfat.

1. Because of the experimental nature of the pilot plant used, large air spaces existed, thus a nitrogen atmosphere was used in an attempt to keep the fat/oxygen contact to a minimum.

2. Natural-Tocopherol (Tenoc GT-1) (1.5 g) (natural antioxidant) was added to the solvent phase (163.2 kg) prior to contact with the fat. The Natural-Tocopherol remained in the solvent phase.

3. On completion of extraction Natural-Tocopherol (200 ppm of active tocopherol) was added to the decholesterolized milkfat to prevent oxidation.

4. The recovered fat/cholesterol obtained from solvent recovery was found to be high in milkfat flavour components and has potential as a source for natural milkfat flavour concentrate.

Notes concerning the extracted milkfat

1. The milkfat exhibited a very desirable flavour.

2. Very little colour was lost (carotene assays indicated a drop from 11 to 10 ppm Beta-carotene).

3. No oxidised flavour was observable after frozen storage for four months.

4. This procedure entirely removes any uncharacteristic flavours commonly associated with dairy products.

Extension of this procedure to other oil and fat systems

1. Wool Grease

Raw wool grease, when extracted once with a methanol/water (98/2w/w) solvent system at 65°C and with a solvent to fat ratio of 5:1 showed a total cholesterol reduction of 33,540 ppm to 22,760 ppm. This represents a 32% cholesterol reduction in a single extraction.

2. Maize Oil

Maize oil as purchased, packaged for supermarket sale, was extracted with methanol/water (98/2, w/w) at 50°C, with a solvent to oil ratio of 5:1 in a single stage process. Three sterols or steroidal compounds were monitored-campesterol, stigmasterol and B-sitosterol. The table below depicts the results, obtained by a GLC analysis using $nC_{28}$ as an internal standard.

| Compound | Sterol in oil before Extraction | Sterol in oil after Extraction | % Removal |
|---|---|---|---|
| Campesterol | 558 ppm | 455 ppm | 18.5 |
| Stigmasterol | 157 ppm | 126 ppm | 19.7 |
| B-sitosterol | 1655 ppm | 1321 ppm | 20.2 |

Soya Oil

The experiment as outlined in 2. above for maize oil was repeated with soya oil, the table below outlines the reduction of sterols observed.

| Compound | Sterol in oil before Extraction | Sterol in oil after Extraction | % Removal |
|---|---|---|---|
| Campesterol | 313 ppm | 239 ppm | 23.6 |
| Stigmasterol | 303 ppm | 217 ppm | 28.4 |
| B-sitosterol | 752 ppm | 627 ppm | 16.6 |

4. Beef Tallow

Beef tallow was warmed at 60° C and treated with a methanol/water (98/2 w/w) solvent system, using a solvent to tallow ratio of 5:1 in a single-stage process. After extracting once with this solvent system, the total cholesterol level was reduced from an initial value of 896 ppm to 610 ppm, indicating a 32% cholesterol reduction.

5. Cod Liver Oil

A single extraction of cod liver oil using methanol/water (98/2, w/w) at 40° C in a solvent to oil ratio of 5:1 demonstrated a cholesterol reduction of 94%. Further this sample of oil had other steroidal compounds, i.e. two oxides of cholesterol present, the 5 alpha, 6 alpha epoxide and 7-keto cholesterol. This was the only oil or fat examined which had observable levels of these two oxides. The table below indicates the reduction of cholesterol and its oxides after a single solvent extraction.

| Compound | Level Before Extraction | Level After Extraction | % Removal |
|---|---|---|---|
| Cholesterol | 1717 ppm | 97 ppm | 94% |
| 7-ketocholesterol | 0.13 ppm | 0.012 ppm | 90.8% |
| 5 alpha 6alpha epoxide | 0.13 ppm | 0.006 ppm | 95.4% |

Clearly from the preceding data, it is possible to remove essentially all of the sterols and/or other steroidal compounds from edible fats/oil using an appropriate process design.

Modification of the Solvent System

Samples of milkfat were warmed at 45° C and extracted once only with a variety of different solvent systems. The table below outlines the cholesterol levels observed before and after extraction.

6

| Solvent System Cholesterol (w/w) | Cholesterol in Fat (PPM) | | % Removed |
|---|---|---|---|
| | Control | Extracted | |
| 98% MeOH 2% $H_2O$ | 1756 | 1582 | 9.9 |
| 93% MeOH, 2% $H_2O$, 5% Diethyl Ether | 1756 | 1517 | 13.6 |
| 93% MeOH, 2% $H_2O$, 5% Ethyl acetate | 1756 | 1049 | 40.2 |
| 93% MeOH, 2% $H_2O$ 5% Acetone | 1756 | 1459 | 16.9 |
| 90% Ethanol, 10% $H_2O$ | 1756 | 1020 | 41.9 |
| 93% MeOH, 2% $H_2O$, 5% $CHCl_3$ | 1756 | 1295 | 26.2 |
| 93% MeOH, 2% $H_2O$, 5% Ethylbuterate | 1756 | 1289 | 26.6 |
| 93% MeOH, 2% $H_2O$ 5% Ethylcaproate | 1756 | 1254 | 28.6 |

It is obvious from the above table, that other solvent systems could offer attractive advantages and could be tailored to suit specific design requirements although the solvent or modified solvent system is preferably lipophobic in nature, that is to say exhibiting low lipid solubility some solution or fat and/or oil in the solvent or solvent system is acceptable, particularly if the fat and/or oil residues remaining after removal of the solvent is used as a source of desirable flavours.

Methods of Solvent Recovery

Of the techniques available for solvent recovery the following have been examined and found suitable.
(a) Distillation.
(b) By passage through a carbon adsorption column.
(c) By passage through a reverse phase adsorption column.
(d) By passage through a reverse osmosis membrane system.
(e) By solvent extraction using a solvent such as chloroform/water. Once the methanol solvent system has been extracted with chloroform, water is added to produce two phases. The methanol/water phase then readily separates from the chloroform phase. Water removal from the methanol is then effected by pervaporation (known technology).

Solvent recovery may be desirable for commercial operation. While only distillation has been investigated on a pilot scale, laboratory experiments have demonstrated that other procedures may be utilised to advantage. The following discussion is centered around laboratory experiments.
1. Distillation - already discussed.
2. Passage of solvent through an adsorption medium.
(a) Active carbon. Eluting solvent, used to extract cholesterol from milkfat, was passed through a column of carbon. Complete removal of cholesterol, its oxides and nearly all of the residual milkfat (as determined by GLC analysis on saponified fat) was achieved. (prior art. See SOLVENT PROBLEMS in Industry" Elsevier, Applied Science Publishers, New York, 1984.) A small amount of heavy triglyceride material (C-54) was observed to break through during solvent elution of the carbon column. Cholesterol binding on this carbon adsorption system appeared to be irreversible.
(b) Silica-$C_{18}$ reverse phase adsorbents. Silica having a surface coating of $nC_{18}$ chemically bound to its surface was found to be an ideal adsorbent for the removal of cholesterol, its oxides and remaining milkfat in extraction solvents. Further this adsorbent could be regenerated simply by washing with hexane or ethylacetate. This provides an attractive method for infinitely recycling the adsorbent. Other systems can also be used.

3. Solvent/solvent extraction

Quantitative removal of cholesterol and remaining milkfast in Methanol/water systems can be achieved by solvent extraction. In one procedure, chloroform is added to the methanol containing cholesterol, milkfat and other extractable material present in raw milkfat. This provides a single phase solution. After the chloroform had been thoroughly mixed, enough water is added to create a two phase system. Separation of the two phases provided a methanol/water phase from which all fat and cholesterol had been removed. Dehydration of the methanol/water phase can then be achieved using known technology (e.g. Pervaporation). Other solvent systems may also be used for this solvent extraction technique.

## 4. Use of Membranes

Pumping a sample of the methanol/water solvent, used to extract cholesterol from milkfat, through a loose R.O. (reverse osrois) membrane, reduced the cholesterol content by 30%, based on GLC assays.

## Extractable material removed from the solvent phase

The process of solvent recovery provides a lower melting point lipid fraction which is high in milk-flavoured components as well as cholesterol. Separation of this fraction could provide an oil-based flavour concentrate containing highly desirable butter-flavoured compounds and an essentially free cholesterol product.

## Edible products manufactured from solvent extracted anhydrous milkfat

### 1. Manufacture of Cheese:

Melted decholesterolized anhydrous milkfat (DCAMF) and pasteurized skim milk together in a suitable ratio were homogenized at selected pressures and temperature to provide a cream. The cream was blended into a further quantity of pasteurized skim milk to provide whole milk with a standardized milkfat content. Cheese starter was added to the milk which was then set with rennet. The coagulum was cut into cubes and stired continuously and the whey expelled. A portion of the whey was removed (10-70%) and replaced with water (10-70%) so as to control the pH of the finished cheese. After the appropriate acidity increase, the whey was removed from the curd and salt applied for the final moisture control. After salting and further whey drainage the salted curd was pressed into blocks. After a suitable pressing period the cheese was wrapped in a nonpermeable barrier material for curing at a temperature in the range of 5-12° C. (Actual curing time was dependent on the desired level of flavour development required). Cheeses were obtained with excellent flavour and texture and with very low cholesterol contents.

### 2. Processed Cheese

Method (a):

Cheese manufactured in 1. above was added to a processed cheese kettle along with suitable emulsifying salts. After heating and mixing the molten processed cheese was packed in suitable containers and cooled.

Method (b):

Decholesterolized anhydrous milkfat, skim milk cheese, emulsifying salts, colour, flavour and salt were added to a processed cheese kettle. After heating and mixing the molten processed cheese was packed in suitable containers and cooled. Both types of processed cheese had excellent flavour and texture and low cholesterol contents.

### 3. UHT - Treated Cream or Whole Milk

Decholesterolized anhydrous milkfat (DCAMF) was melted and added to a predetermined amount of emulsifiers, stabilizers, skim milk and flavours. The appropriate amount of DCAMF was selected so as to obtain cream or whole milk with the desired milkfat content. The mixture of ingredients was heated to a selected temperature and homogenized at selected pressures to produce a stable emulsion. The resultant cream or whole milk was subjected to UHT treatment then aseptically packed. The cream and whole milk was kept refrigerated until required. The UHT products obtained had excellent flavour and physical properties in which the cholesterol content was extremely low.

## 4. Butter

Method (a):

Decholesterolized milkfat is melted at minimum temperatures then maintained at 40°C in a suitable vat. The aqueous phase consisting of water, reconstituted skim milk solids, emulsifiers, stabilizers, flavour and salt (if required) was pasteurized and added to the vat. The contents of the vat were agitated and passed through a scrapped surface heat exchanger and pin worker and the butter thus produced was packaged and cooled. A butter with excellent flavour and containing low cholesterol content was obtained.

## 5. Ice-Cream

A suitable quantity of melted decholesterolized anhydrous milkfat was added to a formulation of reconstituted skim milk powder, sugar, emulsifiers, stabilizers, suitable flavours and corresponding colours which had been pasteurized. The mixture was passed through an ice-cream churn and the ice-cream produced packed and maintained suitably frozen. Ice cream with excellent flavour and with markedly reduced cholesterol content was obtained.

A suitable milkfat is thus obtained which has been used for the manufacture of a wide range of products (including dairy products) which are essentially free of cholesterol, i.e., butter, cheeses, cottage cheeses, ice-creams, and low cholesterol liquid milks of varying fat content. Where necessary flavour (natural, nature identical or artificial) can be used in the formulation of the products in order to restore the expected flavour of the product which is reduced due the initial treatment of the AMF.

While presently preferred embodiments have been described in particular, the invention may be otherwise embodied within the scope of the appended claims.

Although it is preferable to process liquified fat it is possible to obtain some reduction in cholesterol by processing fat in a solid, preferably particulate e.g. micronized state by reducing the size of particles of fat to a suitable size before processing either with or without heating the mixture of fat and solvent to or above a fat liquifying temperature.

The features disclosed in the foregoing description, in the following Claims and/or in the accompanying drawings may, both separately and in any combination thereof, be material for realising the invention in diverse forms thereof.

## Claims

1. A method reducing the amount of sterols and/or other steroidal compounds present in edible fats and/or oils from said edible fats and/or oils, said method comprising the steps of:
adding a solvent and/or a modified solvent system said solvent and/or solvent system being selected to effect selective removal of the sterol and/or other steroidal compound 5;
maintaining the solvent in contact with the fat and/or oil in liquid condition for a predetermined length of time:
separating the solvent from the fat and/or oil and separating out extracted components from the solvent.

2. A method as claimed in Claim 1 wherein said solvent is lipoplobic in nature.

3. A method as claimed in Claim 1 or Claim 2 which includes the step of thoroughly mixing said solvent with said fat and/or oil.

4. A method as claimed in anyone of the preceding claims including the step of removing cholesterol from milk fat.

5. A method as claimed in anyone of Claims 1 to 3 including the steps of removing cholesterol from cream and/or other aqueous emulsions or colloidal suspensions of fats and/or oils and/or vegetable oils.

6. A method as claimed in any one of the preceding claims which includes the step of using methanol as said solvent.

7. A method as claimed in anyone of Claims 1 to 5 which includes the step of using methanol/water mixtures as said solvent.

8. A method as claim in anyone of Claims 1 to 7 which include the step of repeating the steps of anyone of Claims 1 to 7, a desired number of time using fresh solvent or solvent treated to a reusable condition at each repeat of said steps.

9. A method as claimed in anyone of Claims 1 to 7 which includes the step of subjecting the fat and/or oil to treatment by solvent in a column in which treated fat and/or oil and solvent are removable from one end of the column and fat and/or oil and fresh solvent or solvent treated to a reusable condition are added to the other end of the said column.

10. A method as claimed in any one of the preceding claims including the step of treating the separated solvent to a reusable condition.

11. A method as claimed in Claim 10 which includes the step of subjecting the used solvent to a recovery process selected from distillation; passage of the solvent through an adsorption medium selected from active carbon and reverse phase adsorbents solvent extraction of sterol and/or other steroidal compounds from remaining fat and/or oil; and passing the solvent through a membrane which separates the remaining fat and/or oil from the solvent.

12. A method of reducing the amount of sterols and/or steroidal compounds present in edible fats and/or oils from said edible fats and/or oils when effected substantially as herein described.

13. An edible fat and/or oil in which the amount of sterols and/or other steroidal compounds has been reduced by a method according to any one of the preceding claims.

14. Milk fat from which cholesterol has been removed by a method as claimed in anyone of Claims 1 to 12.

15. Food products including milk fat according to Claim 14.

16. Sterols and/or other steroidal compounds removed from an edible fat and/or oil by a method according to any one of Claims 1 to 12.

17. Cholesterol removed from a edible fat and/or oil by a method according to anyone of Claims 1 to 12.

18. A fat and/or oil residue remaining after removal of solvent from a mixture of fat and/or oil and solvent by a method according to anyone of Claims 1 to 12.

19. A method for the removal of steroidal material from fats and oils comprising:

(a) taking said fat or oil in either its solid or liquid state;

(b) adding a solvent or modified solvent system which has low solubility in the said fat or oil, said solvent system being selected to effect selective removal of steroidal material;

(c) mixing said fat or oil and solvent to create a solvent phase and fat or oil phase;

(d) separating said phases; and

(e) removing from said fat or oil phase any solvent therein.

20. A method as set forth in Claim 19 wherein said solvent to fat or oil ratio is greater than the solubility of the solvent system in the fat or oil.

21. A method set forth in Claim 1, wherein said solvent is added to said oil or fat at a temperature about equal to the temperature used to liquify said fat.or oil.

22. A method as claimed in anyone of Claims 19 to 21, wherein said solvent is added to sail oil or fat and the temperature adjusted to liquify said fat or oil.

23. A method as set forth in anyone of claim 19 to 23 , wherein said solvent is added in a ratio of 5:1 solvent to fat or oil.

24. A method as set forth in anyone of claim 19 to 23, wherein steps (a) through (e) are repeated until substantially all of said sterol material is removed from said fat or oil.

25. A method as set forth in anyone of claims 19 to 24, wherein the fat is milkfat and the solvent is methanol or methanol/water mixtures.

26. A method as claimed in anyone of claims 19 to 25, wherein said separated solvent phase is extracted therefrom.

27. A method as set forth in claim 26, wherein said solvent extracted from said solvent phase is used in step (b).

28. A method as set forth in claim 27, wherein said extraction is by one of steam distillation, carbon absorption column, silica reverse phase absorption, solvent/sorbent extraction or reverse osmosis membrane.

29. A sterolized cheese comprising a fat or oil (eg. milkfat) having extracted therefrom sterols by means of liquid/liquid extraction.

30. A food product containing a fot or oil (eg. milkfat) processed according to anyone of claims 19 to 28.

31. A food product is one of cheese, processed cheese, treated cream, whole milk, butter and ice cream.

32. A food product including a fat or oil processed in accordance with the method of anyone of claims 19 to 28.